# EUROPÄISCHE PATENTANMELDUNG

(11) **EP 4 851 585 A1**
(43) Veröffentlichungstag der Anmeldung: **09.12.2026**
(21) Anmeldenummer: 25180718.6
(22) Anmeldetag: 04.06.2025
(51) Int. Cl.: G01D 5/347

(54) **OPTISCHE EMPFANGSEINHEIT SOWIE POSITIONSMESSEINRICHTUNG UMFASSEND EINE SOLCHE EMPFANGSEINHEIT**

(71) Anmelder: Dr. Johannes Heidenhain GmbH, 83301 Traunreut (DE)
(72) Erfinder: ANGERER, Roman, 83435 Bad Reichenhall (DE)

(57) **Zusammenfassung**

Die Erfindung betrifft eine optische Empfangseinheit (20) für eine Positionsmesseinrichtung, umfassend ein Trägersubstrat (22), eine Detektoreinheit (25), mit einer Oberseite (25.1), welche wenigstens ein Detektorelement (26) aufweist und eine Faseroptik-Platte (23), bestehend aus einer Vielzahl aneinandergrenzend angeordneter Lichtleitfasern, deren eines Ende eine Lichteintrittsfläche (23.1) und deren anderes Ende eine Lichtaustrittsfläche (23.2) der Faseroptik-Platte (23) bilden. Die Detektoreinheit (25) ist auf dem Trägersubstrat (22) angeordnet. Zudem ist zwischen der Lichtaustrittsfläche (23.2) der Faseroptik-Platte (23) und der Oberseite (25.1) der Detektoreinheit (25) ein Zwischenraum (28) durch wenigstens ein Abstandshaltemittel (27) ausgebildet. Der Zwischenraum (28) ist zumindest teilweise mit einem transparenten Medium (41) ausgefüllt.

Die Erfindung betrifft ferner eine Positionsmesseinrichtung mit entsprechender erfindungsgemäßen optischen Empfangseinheit (20).

## Beschreibung

### GEBIET DER TECHNIK

Die vorliegende Erfindung betrifft eine optische Empfangseinheit für eine Positionsmesseinrichtung sowie eine Positionsmesseinrichtung mit einer entsprechenden optischen Empfangseinheit.

### STAND DER TECHNIK

Aus der Offenlegungsschrift EP 3 260 820 A1 ist eine optische Positionsmesseinrichtung bekannt, welche eine Maßverkörperung mit inkrementellen und absoluten Teilungsbereichen und eine Abtasteinheit mit Lichtquelle, Detektoranordnung und einer Faseroptik-Anordnung aufweist. Ein transparentes Zwischenraum-Medium zwischen der Faseroptik-Anordnung und der Detektoranordnung minimiert die Ablenkung der Lichtstrahlen und verbessert die Signalqualität.

### ZUSAMMENFASSUNG DER ERFINDUNG

Der Erfindung liegt die Aufgabe zugrunde eine optische Empfangseinheit für eine Positionsmesseinrichtung zu schaffen, welche eine vereinfachte Montage der Komponenten der Empfangseinheit ermöglicht und vergleichsweise unempfindlich gegenüber eventuellen Verschmutzungen ist.

Diese Aufgabe wird erfindungsgemäß durch die Merkmale des Anspruchs 1 bzw. des Anspruchs 15 gelöst. Vorteilhafte Ausgestaltungen und Weiterbildungen sind in den jeweils abhängigen Ansprüchen angegeben.

Die erfindungsgemäße optische Empfangseinheit für eine Positionsmesseinrichtung umfasst ein Trägersubstrat, eine Detektoreinheit, mit einer Oberseite, welche wenigstens ein Detektorelement aufweist und eine Faseroptik-Platte, bestehend aus einer Vielzahl aneinandergrenzend angeordneter Lichtleitfasern, deren eines Ende eine Lichteintrittsfläche und deren anderes Ende eine Lichtaustrittsfläche der Faseroptik-Platte bilden. Die Detektoreinheit ist auf dem Trägersubstrat angeordnet. Zudem ist zwischen der Lichtaustrittsfläche der Faseroptik-Platte und der Oberseite der Detektoreinheit ein Zwischenraum durch wenigstens ein Abstandshaltemittel ausgebildet. Der Zwischenraum ist zumindest teilweise mit einem transparenten Medium ausgefüllt.

Unter einem ausfüllen des Zwischenraums mit dem transparenten Medium ist im Rahmen dieser Offenbarung zu verstehen, dass das transparente Medium die Lichtaustrittsfläche der Faseroptik-Platte und die Oberseite der Detektoreinheit berührt und den Raum dazwischen einnimmt. Erfolgt dies lediglich teilweise, so ist gemeint, dass der Zwischenraum nur partiell und nicht die gesamte Fläche des Zwischenraums gefüllt ist, d. h. beispielsweise ist dann nur im Bereich des Detektorelements das transparente Medium vorhanden oder beim Vorhandensein mehrerer Detektorelemente nur im Bereich eines oder mehrerer bestimmter Detektorelemente.

Bei dem transparenten Medium kann es sich um einen flüssigen, gasförmigen oder festen Stoff handeln, welcher einen Brechungsindex im Bereich 1.3 bis 2.3 aufweist. Ein Beispiel für ein derartiges transparentes Medium ist ein transparentes Gas oder Gasgemisch wie Luft oder ein transparenter Klebstoff.

Gemäß einer vorteilhaften Weiterbildung der Erfindung ist das wenigstens eine Abstandshaltemittel zwischen der Lichtaustrittsfläche der Faseroptik-Platte und der Oberseite der Detektoreinheit angeordnet, d. h. innerhalb des Zwischenraums.

In weiterer Ausgestaltung bedeckt das transparente Medium das wenigstens eine Detektorelement flächig.

Mit Vorteil weist das wenigstens eine Abstandshaltemittel einen runden Querschnitt auf und ist vom transparenten Medium umschlossen.

Mit einem Umschließen des wenigstens einen Abstandshaltemittels mit dem transparenten Medium ist im Rahmen dieser Offenbarung zu verstehen, dass das zumindest eine Abstandshaltemittel in das transparente Medium eingebettet ist, d. h., dass die exponierte(n) Randseite(n) des wenigstens einen Abstandshalteelements direkt in Kontakt mit dem transparenten Medium sind.

Gemäß einer vorteilhaften Ausgestaltung ist als transparentes Medium ein aushärtbares, mit Kapillarwirkung in den Zwischenraum drucklos einbringbares Epoxidharz oder Silikon vorgesehen.

Gemäß einer alternativen Ausgestaltung ist als transparentes Medium ein Gas oder Gasgemisch, insbesondere Luft, vorgesehen.

Mit Vorteil ist die Faseroptik-Platte an das Trägersubstrat durch ein Unterfüllmaterial befestigt, welches zwischen der Lichtaustrittsfläche der Faseroptik-Platte und dem Trägersubstrat angeordnet ist.

Gemäß einer vorteilhaften Ausgestaltung umfasst die Empfangseinheit weiter:
- Anschlussmittel, die an der Detektoreinheit vorhanden sind, und
- eine Verdrahtung, die zwischen dem Trägersubstrat und den Anschlussmitteln der Detektoreinheit ausgebildet ist.

Die Anschlussmittel und die Verdrahtung sind durch ein erstes Oberfüllmaterial bedeckt, welches sich von der Oberseite der Detektoreinheit bis zum Trägersubstrat erstreckt.

Mit Vorteil umfasst die Empfangseinheit ein zweites Oberfüllmaterial, welches sich vom ersten Oberfüllmaterial über die Oberseite der Detektoreinheit und wenigstens bis zum transparenten Medium erstreckt.

Gemäß einer vorteilhaften Weiterbildung der Erfindung erstreckt sich das zweite Oberfüllmaterial zusätzlich vom transparenten Medium bis zur Randseite der Faseroptik-Platte.

D.h. das zweite Oberfüllmaterial erstreckt sich somit von einem Teilabschnitt des ersten Oberfüllmaterials über einen Teilabschnitt der Oberseite der Detektoreinheit über einen Teilabschnitt des transparenten Mediums hin bis zur Randseite der Faseroptik-Platte.

Mit Vorteil weist das Trägersubstrat eine Vertiefung auf, welche gebildet wird aus einer Grundfläche und einer die Grundfläche umgebenden Seitenwand. Die Detektoreinheit ist innerhalb der Vertiefung auf der Grundfläche angeordnet.

Mit Vorteil weist die Seitenwand des Trägersubstrats eine Endfläche auf, wobei die Endfläche parallel zur Oberseite der Detektoreinheit ausgebildet ist und unterhalb der Oberseite der Detektoreinheit angeordnet ist.

Gemäß einer vorteilhaften Weiterbildung ist das Unterfüllmaterial auf der Endfläche des Trägersubstrats angeordnet, wobei sich das Unterfüllmaterial von der Endfläche des Trägersubstrats zur Lichtaustrittsfläche und zusätzlich bis zur Randseite der Faseroptik-Platte erstreckt.

Mit Vorteil ragt die Faseroptik-Platte mit wenigstens einer weiteren Randseite über das Trägersubstrat hinaus.

Die Erfindung umfasst zudem eine optische Positionsmesseinrichtung zur Bestimmung der Position eines ersten Objekts gegenüber einem relativ hierzu entlang mindestens einer Messrichtung beweglichen zweiten Objekt mit
- einer sich entlang der Messrichtung erstreckenden Maßverkörperung, die mit dem ersten Objekt verbunden ist und mindestens eine Messteilung umfasst, die aus alternierenden entlang der Messrichtung angeordneten Teilungsbereichen mit unterschiedlichen optischen Eigenschaften besteht, und
- einer Abtasteinheit, die mit dem zweiten Objekt verbunden ist und mindestens eine Lichtquelle und die erfindungsgemäße optische Empfangseinheit umfasst,
wobei aus der Wechselwirkung zwischen den von der Lichtquelle emittierten Strahlenbündeln mit der Messteilung ein Lichtmuster resultiert und die Faseroptik-Platte das Lichtmuster in eine Detektionsebene des zumindest einen Detektorelements überträgt.

Gemäß einer vorteilhaften Weiterbildung der erfindungsgemäßen optischen Positionsmesseinrichtung ragt die Faseroptik-Platte mit wenigstens einer eine Anschlagsfläche aufweisenden weiteren Randseite über das Trägersubstrat hinaus, wobei ein Kontakt zwischen der weiteren Randseite mit Anschlagsfläche der Faseroptik-Platte und dem zweiten Objekt ausgebildet ist, so dass eine vorbestimmte relative Positionierung der Empfangseinheit zum zweiten Objekt ausgebildet ist.

Gemäß einer Vorteilhaften Weiterbildung der optischen Positionsmesseinrichtung bildet das zweite Objekt das Gehäuse der optischen Positionsmesseinrichtung.

Als maßgeblicher Vorteil der erfindungsgemäßen Lösung ist anzuführen, dass durch das Vorsehen von Abstandshaltemitteln der Zwischenraum zwischen der Faseroptik-Platte und der Detektoreinheit über die gesamte Fläche exakt ausbildbar ist, wodurch ein Einbringen des transparenten Mediums in den Zwischenraum durch den Kapillareffekt reproduzierbar möglich ist.

Das im Zwischenraum angeordnete transparente Medium sorgt neben seinen optischen Eigenschaften zudem dafür, dass keine Verunreinigungen in den Zwischenraum gelangen können.

Die Erfindung wird nachstehend auch hinsichtlich weiterer Merkmale und Vorteile anhand der Beschreibung eines Ausführungsbeispiels und unter Bezugnahme auf die beiliegenden, schematischen Zeichnungen näher erläutert.

### KURZE BESCHREIBUNG DER ZEICHNUNGEN

Es zeigt
- Fig. 1: eine Explosionsdarstellung eines Ausführungsbeispiels der erfindungsgemäßen optischen Empfangseinheit mit einer Maßverkörperung und einer Lichtquelle,
- Fig. 2: die optische Empfangseinheit aus Fig. 1 in Draufsicht,
- Fig. 3: eine Schnittansicht der optischen Empfangseinheit entlang der Schnittlinie A-A aus Fig. 2 mit einer Maßverkörperung und einer Lichtquelle,
- Fig. 4: eine Schnittansicht der optischen Empfangseinheit entlang der Schnittline B-B aus Fig. 2.

### BESCHREIBUNG DER AUSFÜHRUNGSFORMEN

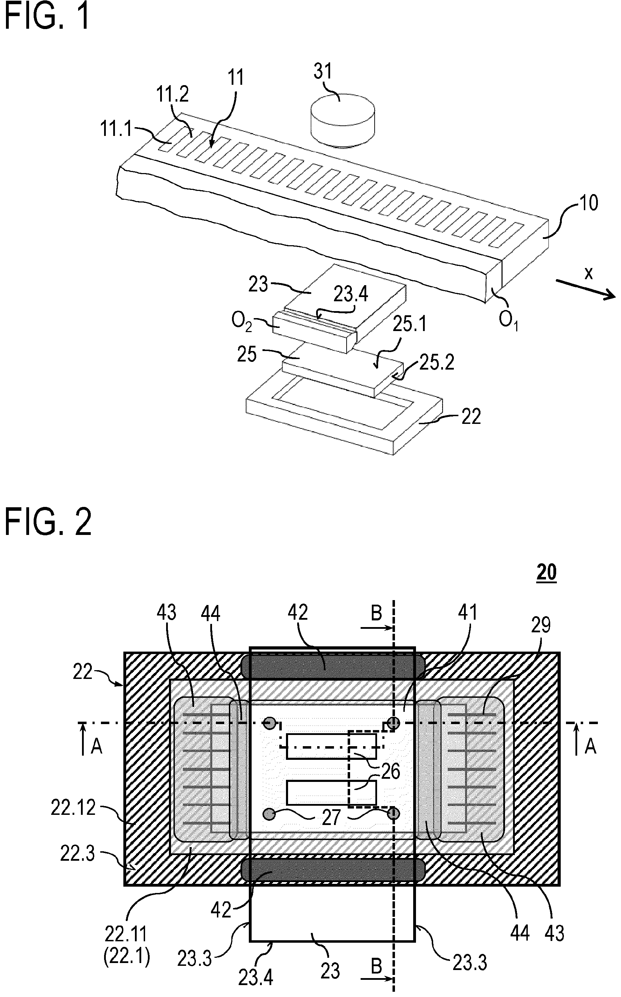

Eine schematische Explosionsdarstellung eines Ausführungsbeispiels der erfindungsgemäßen optischen Empfangseinheit für eine Positionsmesseinrichtung ist in Fig. 1 gezeigt. Weitere Details der Empfangseinheit sind in Fig. 2 bis Fig. 4 dargestellt. Anhand der verschiedenen Figuren wird nachfolgend das Ausführungsbeispiel erläutert.

Die erfindungsgemäße optische Empfangseinheit 20 eignet sich für den Einsatz in einer Positionsmesseinrichtung und ermöglicht eine Bestimmung der Position eines ersten Objekts O₁ gegenüber einem relativ hierzu entlang mindestens einer Messrichtung x beweglichen zweiten Objekt O₂. Das erste Objekt O₁, beispielsweise eine erste Maschinenkomponente, ist hierbei mit der sich entlang der Messrichtung x erstreckenden Maßverkörperung 10 der Positionsmesseinrichtung verbunden. Das zweite Objekt O₂, beispielsweise das Gehäuse der Positionsmesseinrichtung, welches etwa an eine zweite Maschinenkomponente gekoppelt ist, ist gegenüber der ersten Maschinenkomponente entlang der Messrichtung x beweglich und mit der die Empfangseinheit 20 umfassenden Abtasteinheit 30 der Positionsmesseinrichtung verbunden. Im vorliegenden Ausführungsbeispiel ist eine Relativbewegung der beiden Objekte O₁, O₂ entlang einer linearen Messrichtung vorgesehen, wie in Fig. 1 gezeigt. Im Rahmen der Erfindung kann es sich bei der Positionsmesseinrichtung jedoch auch um eine Positionsmesseinrichtung zur Erfassung rotatorischer Relativbewegungen handeln.

Mit Hilfe der Positionsmesseinrichtung mit erfindungsgemäßer optischen Empfangseinheit 20 lassen sich aus der optischen Abtastung der Maßverkörperung 10 positionsabhängige Signale bezüglich der Position der beiden zueinander beweglichen Objekte O₁, O₂ bzw. der entsprechenden Maschinenkomponenten erzeugen und an eine nicht dargestellte Folgeelektronik übertragen. Als Folgeelektronik kann z. B. eine übergeordnete Maschinensteuerung vorgesehen sein, die die positionsabhängigen Signale zur Positionierung der Maschinenkomponenten nutzt.

Die Maßverkörperung 10 besteht aus einem transparenten Trägersubstrat, beispielsweise aus Glas, auf dessen Oberseite im vorliegenden Ausführungsbeispiel eine Messteilung angeordnet ist. Die Messteilung 11 werden durch alternierend entlang der Messrichtung x angeordnete, rechteckförmige Teilungsbereiche 11.1, 11.2 mit unterschiedlichen optischen Eigenschaften gebildet. Im erläuterten Ausführungsbeispiel sind lichtundurchlässige Teilungsbereiche 11.1, beispielsweise aus Chrom, und lichtdurchlässige Teilungsbereiche 11.2 in der Messteilung 11 vorgesehen. Es ist in diesem Ausführungsbeispiel der Positionsmesseinrichtung mit erfindungsgemäßer optischen Empfangseinheit 20 somit eine Durchlicht-Abtastung der Messteilung 11 vorgesehen.

Die Messteilung 11 kann beispielsweise als aperiodische Codierung entlang der Messrichtung x ausgebildet sein, die zur Absolutpositionsbestimmung geeignet ist; nachfolgend sei diesbezüglich auch von einer absolutcodierten Messteilung bzw. einer Absolut-Messteilung die Rede. Die aperiodische Codierung der Messteilung 11 kann hierbei als Pseudo Random Code (PRC) ausgebildet sein.

Die Messteilung 11 kann ergänzend oder alternativ als Inkremental-Teilung bzw. weitere inkrementale Messteilung ausgebildet sein und eine periodische Anordnung unterschiedlicher Teilungsbereiche entlang der Messrichtung x umfassen. Die inkrementale Messteilung kann beispielsweise als Amplitudengitter auf dem Trägersubstrat ausgebildet sein und periodisch alternierend angeordnete, lichtundurchlässige Teilungsbereiche und lichtdurchlässige Teilungsbereiche aufweisen, die ebenfalls rechteckförmig ausgebildet sind. Beim Vorsehen einer Messteilung 11 mit absoluter und inkrementeller Messteilung kann durch die optische Abtastung der Absolut-Messteilung durch die Positionsmesseinrichtung mit erfindungsgemäßer optischen Empfangseinheit 20 eine grobe Absolutpositionsinformation gewonnen werden, die mit der aus der optischen Abtastung der Inkremental-Teilung erhaltenen, hochauflösenden Inkrementalinformation verrechnet wird. Ausgangsseitig steht somit eine hochauflösende absolute Positionsinformation in Bezug auf die Position der beiden Objekte O₁, O₂ zur Verfügung bzw. entsprechende positionsabhängige Signale zur Weiterverarbeitung.

Auf Seiten der Abtasteinheit 30 sind in der Positionsmesseinrichtung die weiteren erforderlichen Komponenten zur optischen Durchlicht-Abtastung der Maßverkörperung 10 bzw. der Messteilung 11 und zur Erzeugung der positionsabhängigen Signale angeordnet. Hierzu gehört die auf einer Seite der Maßverkörperung 10 angeordnete Lichtquelle 31, beispielsweise ausgebildet als LED (Light Emitting Diode), die Strahlung mit einer Wellenlänge von 850 nm emittiert und hier zur Abtastung der Messteilung 11 genutzt wird. Der Lichtquelle 31 kann in Strahlausbreitungsrichtung eine in den Figuren nicht dargestellte Kollimationsoptik vorgeordnet sein, um die in Richtung der Maßverkörperung 10 emittierten Strahlenbündel der Lichtquelle 31 zu kollimieren. Auf der gegenüberliegenden Seite der Maßverkörperung 10 sind in der Abtasteinheit 30 weitere Komponenten - insbesondere in Form der erfindungsgemäßen optischen Empfangseinheit 20 - angeordnet, die zur optischen Abtastung der Messteilung 11 und zur Erzeugung der positionsabhängigen Signale dienen.

Zur Abtastung der Messteilung 11 ist eine Faseroptik-Platte 23 sowie eine Detektoreinheit 25 in der Empfangseinheit 20 angeordnet, wobei die Detektoreinheit 25 aus einer zur Messrichtung x periodischen Anordnung einzelner Detektorelemente 26 besteht, welche auf oder innerhalb der Oberseite 25.1 der Detektoreinheit angeordnet sind. Die Detektoreinheit 25 ist auf einem Trägersubstrat 22 platziert, beispielsweise auf einer geeigneten Platine oder Leiterplatte, welche insbesondere aus eine Verbundkeramik besteht.

Zur Übertragung des durch die Messteilung 11 erzeugten Lichtmusters in die Detektionsebene der Detektoreinheit 25 dient vorliegend die Faseroptik-Platte 23, welche aus einer Vielzahl aneinandergrenzend angeordneter Lichtleitfasern besteht. In der Praxis umfassen derartige Faseroptik-Platten Bündel von Lichtleitfasern, die miteinander verschmolzen sind und zu einer planparallelen Platte geschnitten und geschliffen werden.

Vorzugsweise ist die Detektoreinheit 25 in einem Sensor-ASIC integriert, der auf dem Trägersubstrat 22 angeordnet ist. Im Sensor-ASIC kann bereits eine erste Verarbeitung der erfassten Signale erfolgen, bevor diese an eine Folgeelektronik übertragen werden.

Maßgeblich sind in der Positionsmesseinrichtung nunmehr verschiedene Maßnahmen im Zusammenhang mit der erfindungsgemäßen optischen Empfangseinheit 20, welche nachfolgend anhand der Fig. 2 bis Fig. 4 im Detail erläutert werden.

Wie bereits zuvor beschrieben umfasst die erfindungsgemäße Empfangseinheit 20 das Trägersubstrat 22, welches rechteckförmig ausgebildet ist und eine Vertiefung 22.1 aufweist. Die Vertiefung 22.1 wird gebildet aus einer annähernd rechteckigen Grundfläche 22.11, welche von einer durchgängigen Seitenwand 22.12 umschlossen ist. Die Seitenwand 22.12 ist um die Grundfläche herum mit einer vorbestimmten Wandstärke ausgebildet, so dass die Seitenwand 22.12 über eine Endfläche 22.3 verfügt. Die Endfläche 22.3 besitzt annährend die Form eines rechteckigen Rings. Das Trägersubstrat 22 ist derart ausgebildet, dass die Endfläche 22.3 parallel zur Oberseite 25.1 der Detektoreinheit 25 sowie unterhalb der Oberseite 25.1 der Detektoreinheit 25 liegt, sobald die Detektoreinheit 25 in der Vertiefung 22.1 des Trägersubstrats 22 angeordnet ist. Anders ausgedrückt, ist, bezogen auf die Grundfläche 22.11, die Oberseite 25.1 der Detektoreinheit 25 weiter von der Grundfläche 22.11 entfernt, als es die Endfläche 22.3 des Trägersubstrats 22 ist. Mit Vorteil ist die Grundfläche 22.11 des Trägersubstrats 22 flächenmäßig größer als die Fläche der Oberseite 25.1 der Detektoreinheit 25. Insbesondere die Grundfläche 22.11 des Trägersubstrats 22 kann über mehrere Anschlussmittel 22.4 verfügen.

Innerhalb der Vertiefung 22.1 des Trägersubstrats 22 und zentriert auf der Grundfläche 22.11 befindet sich die Detektoreinheit 25, welche auf ihrer Oberseite 25.1 über die beiden Detektorelemente 26 verfügt. Die Detektoreinheit 25 umfasst mehrere Anschlussmittel 25.3 welche bevorzugt auf oder in der Oberseite 25.1 der Detektoreinheit 25 und in der Nähe der beiden Randseiten 25.3 angeordnet sind.

Die Faseroptik-Platte 23 besteht, wie zuvor erläutert, aus einer Vielzahl aneinandergrenzend angeordneter Lichtleitfasern, deren eines Ende eine Lichteintrittsfläche 23.1 und deren anderes Ende eine Lichtaustrittsfläche 23.2 der annähernd rechteckig ausgebildeten Faseroptik-Platte 23 bilden. Die Faseroptik-Platte 23 ist über der Detektoreinheit 25 und insbesondere über den Detektorelementen 26 angeordnet. Die Lichteintrittsfläche 23.1 der Faseroptik-Platte 23 ist in der erfindungsgemäßen Empfangseinheit 20 beim Einsatz in einer Positionsmesseinrichtung der Maßverkörperung 10 bzw. der abgetasteten Messteilung 11 zugewandt. Die Lichtaustrittsfläche 23.2 der Faseroptik-Platte 23 ist der Oberseite 25.1 der Detektoreinheit 25 und insbesondere den Detektorelementen 26 zugewandt.

Aus der Wechselwirkung zwischen den von der Lichtquelle 31 emittierten Strahlenbündeln mit der Messteilung 11 resultiert ein Lichtmuster, das die Faseroptik-Platte 23 in eine Detektionsebene der Detektoreinheit 25 überträgt. Innerhalb der Faseroptik-Platte 23 breitet sich das auf die Lichteintrittsfläche 23.1 einfallende Licht in den Lichtleitfasern aus und wird über die Lichtaustrittsfläche 23.2 wieder ausgegeben. Durch die Anordnung der Faseroptik-Platte 23 oberhalb der Detektoreinheit 25 kann das auf die Lichteintrittsfläche 23.1 einfallende Licht somit zuverlässig zur Lichtaustrittsfläche 23.2 geleitet werden, ohne gestreut zu werden.

Die rechteckige Faseroptik-Platte 23 und das rechteckige Trägersubstrat 22 sind so zueinander angeordnet, dass die Längsseiten bildenden Randseiten 23.3 der Faseroptik-Platte 23 senkrecht zu den Längsseiten des Trägersubstrats 22 verlaufen.

Die Faseroptik-Platte 23 ist durch ein Unterfüllmaterial 42 am Trägersubstrat 22 befestigt. Genauer gesagt erstreckt sich das Unterfüllmaterial 42 von der Lichtaustrittsfläche 23.2 der Faseroptik-Platte 23 bis zur Endfläche 22.3 des Trägersubstrats 22. Gemäß dem vorgestellten Ausführungsbeispiel ist das Unterfüllmaterial 42 in Form von zwei Streifen auf jenen Abschnitten der Endfläche 22.3 angeordnet, die von der Faseroptik-Platte 23 in Draufsicht überlagert werden. Das Unterfüllmaterial 42 kann dabei, wie in Fig. 2 gezeigt, beidseitig über die Randseiten 23.3 der Faseroptik-Platte 23 geringfügig hinausragen und sich in diesem Bereich von der Endfläche 22.3 des Trägersubstrats 22 bis zu den Randseiten 23.3 der Faseroptik-Platte erstrecken, wodurch auf die Randseiten 23.3 wirkende Kräfte zusätzlich kompensiert werden können.

Bei dem Unterfüllmaterial 42 kann es sich beispielsweise um ein hochgefülltes und standfestes Epoxidharz handeln.

Durch das Unterfüllmaterial 42 kann auf eine zusätzliche Anordnung zur Befestigung der Faseroptik-Platte 23 an der Detektoreinheit 25 verzichtet und der Aufbau der Empfangseinheit 20 somit insgesamt vereinfacht werden.

Zwischen der Lichtaustrittsfläche 23.2 der Faseroptik-Platte 23 und der Oberseite 25.1 der Detektoreinheit 25 ist ein Zwischenraum 28 angeordnet. Innerhalb des Zwischenraums 28 befinden sich mehrere Abstandshaltemittel 27 sowie ein transparentes Medium 41.

Die Abstandshaltemittel 27 sorgen für einen vorbestimmten Abstand zwischen der Oberseite 25.1 der Detektoreinheit 25 und der Lichtaustrittsfläche 23.2 der Faseroptik-Platte 23. Bevorzugt befinden sich die Abstandshaltemittel 27 innerhalb des Zwischenraums 28 und liegen unmittelbar an der Lichtaustrittsfläche 23.2 der Faseroptik-Platte 23 und der Oberseite 25.1 der Detektoreinheit 25 an. Wie in Fig. 2 gezeigt ist, können zum Ausbilden des definierten Zwischenraums 28 vier Abstandshaltemittel 27 vorgesehen sein, welche einen runden Querschnitt aufweisen und um die Detektorelemente 26 herum symmetrisch angeordnet sind. Auf diese Weise kann der vorbestimmte Abstand über die gesamte Fläche exakt, zuverlässig und ohne externe Hilfsmittel ausgebildet werden. Vorzugsweise liegt die Dicke des Zwischenraums 28 im Bereich zwischen 5 µm und 100 µm und insbesondere bei rund 15 µm. Die Abstandshaltemittel 27 können beispielsweise aus einem fotolithografierbaren Epoxidharz bestehen.

Durch die Abstandshaltemittel 27 kann der Zwischenraum 28 zwischen der Faseroptik-Platte 23 und der Detektoreinheit 25 über die gesamte Fläche exakt ausgebildet werden, wodurch ein Einbringen des transparenten Mediums 41 in den Zwischenraum 28 durch den Kapillareffekt bei großen Stückzahlen reproduzierbar möglich ist.

Zwischen der Lichtaustrittsfläche 23.2 der Faseroptik-Platte 23 und der Oberseite 25.1 der Detektoreinheit 25 ist im Zwischenraum 28 das transparente Medium 41 angeordnet. Vorzugsweise liegt der Brechungsindex des transparenten Mediums 41 im Bereich von 1.3 bis 2.3.

Bei dem transparenten Medium 41 handelt es sich insbesondere um eine für die emittierte Strahlung der Lichtquelle 31 durchlässige Schicht. Als transparentes Medium 41 kann ein aushärtbares, mit Kapillarwirkung in den Zwischenraum 28 drucklos einbringbarer Klebstoff vorgesehen sein, beispielsweise ein Epoxidharz oder Silikon.

Hierzu wird das transparente Medium 41 - nachdem die Abstandshaltemittel 27 auf die Oberseite 25.1 der Detektoreinheit 25 aufgebracht und darauf die Faseroptik-Platte 23 positioniert wurde - auf die Oberseite 25.1 der Detektoreinheit 25 und vorzugsweise entlang einer der Randseiten 23.3 der Faseroptik-Platte 23 aufgebracht. Durch den Kapillareffekt wird das noch flüssige transparente Medium 41 in den Zwischenraum 28 gesogen und verteilt sich dort flächig über die Detektorelemente 26 und um die vier Abstandshaltemittel 27. Positiv ist zudem, dass einerseits nach dem Aushärten des transparenten Medium 41 die Abstandshaltemittel 27 gegen ein Verrutschen gesichert sind und andererseits, dass der Zwischenraum 28 und insbesondere die Detektorelemente 26 vor einer Verunreinigung geschützt sind.

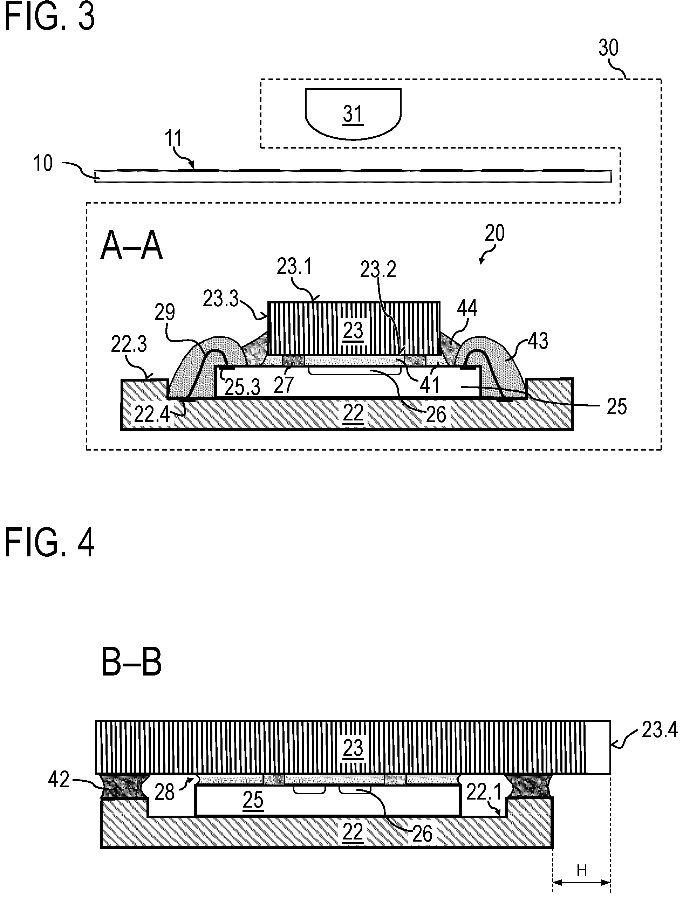

Die Detektoreinheit 25 ist über eine Verdrahtung 29 mit dem Trägersubstrat 22 elektrisch leitend verbunden. Wie in Fig. 2 gezeigt ist, umfasst die Verdrahtung 29 mehrere einzelne Drähte, welche sich vom Trägersubstrat 22 ausgehend bis zu den Anschlussmitteln 25.3 der Detektoreinheit 25 erstrecken und so eine elektrisch leitende Verbindung zwischen beiden Bauteilen ausbilden. Jeder der Drähte ist mit einem Ende in Kontakt mit einem Anschlussmittel 25.3 der Detektoreinheit 25 und mit seinem anderen Ende mit einem Anschlussmittel 22.4 des Trägersubstrats 22. Die Anschlussmittel 22.4 des Trägersubstrats 22 können beispielsweise auf der Grundfläche 22.11 und ergänzend oder alternativ der inneren Fläche der Seitenwand 22.12 des Trägersubstrats 22 liegen. Wie Fig. 3 entnommen werden kann, sind die einzelnen Drähte im freiliegenden Abschnitt zwischen den beiden Enden gekrümmt ausgebildet.

Zum Schutz der freiliegenden Verdrahtung 29 und der Anschlussmittel 22.4, 25.3 weist die erfindungsgemäße Empfangseinheit 20 ein erstes Oberfüllmaterial 43 auf, welches die Verdrahtung 29 und die Anschlussmittel 22.4, 25.3 bedeckt. Genauer gesagt bedeckt bzw. umgibt das erste Oberfüllmaterial 43 den freiliegenden Teil der Verdrahtung 29 und bedeckt teilweise die Oberseite 25.1 der Detektoreinheit 25 sowie deren Anschlussmittel 25.3 und erstreckt sich bis zur Endfläche 22.3, so dass auch die Anschlussmittel 22.4 des Trägersubstrats 22 bedeckt sind. Die Vertiefung 22.1 bzw. die Innenfläche der Seitenwand 22.12 des Trägersubstrats 22 dient unter anderem als Begrenzungswall für das erste Oberfüllmaterial 43, wodurch sich das erste Oberfüllmaterial 43 somit auch bis zur Seitenwand 22.12 erstrecken kann.

Wie Fig. 2 und Fig. 3 entnommen werden kann, bedeckt das erste Oberfüllmaterial 43 in Form von zwei separaten Vergussmassen insbesondere jene Teile der Oberseite 25.1 der Detektoreinheit 25, welche die Anschlussmittel 25.3 aufweisen, die Randseite 25.2 der Detektoreinheit 25 sowie die Grundfläche 22.11 mit den Anschlussmitteln 22.4 und die Innenfläche der Seitenwand 22.12 des Trägersubstrats 22.

Das erste Oberfüllmaterial 43 kann beispielsweise ein hochgefülltes Epoxidharz sein, welches durch Vergießen aufgebracht wird. Während des Vergusses wird das noch fließfähige erste Oberfüllmaterial 43 auf die Verdrahtung 29 und die zuvor erläuterten Bereiche der Detektoreinheit 25 und des Trägersubstrats 22 aufgebracht und anschließend über ein geeignetes Verfahren ausgehärtet.

Das erste Oberfüllmaterial 43 sorgt nach dem Aushärten zum einen dafür, dass die freiliegende Verdrahtung 29 und die Anschlussmittel 22.4, 25.3 des Trägersubstrats 22 und der Detektoreinheit 25 vor Klimaeinflüssen und aggressiven Medien geschützt sind und zum anderen für eine Fixierung der Detektoreinheit 25 an das Trägersubstrat 22.

Die erfindungsgemäße Empfangseinheit 20 weist neben dem ersten Oberfüllmaterial 43 zusätzlich noch ein zweites Oberfüllmaterial 44 auf, welches wenigstens zwischen dem transparenten Medium 41 und dem ausgehärteten ersten Oberfüllmaterial 43 angeordnet ist. Insbesondere bedeckt das zweite Oberfüllmaterial 44 gemäß dem Ausführungsbeispiel, wie in Fig. 3 gezeigt, auch die beiden Randseiten 23.3 der Faseroptik-Platte 23, das ausgehärtete transparente Medium 41, die Oberseite 25.1 der Detektoreinheit und das erste Oberfüllmaterial 43 in Form von zwei separaten Vergussmassen. Bei den Randseiten 23.3 handelt es sich insbesondere um die beiden Längsseiten der Faseroptik-Platte 23. Das zweite Oberfüllmaterial 43 sorgt einerseits für eine zusätzliche Fixierung der Faseroptik-Platte 23 und andererseits als Schutz der sonst noch freiliegenden Oberseite 25.1 der Detektoreinheit 25, d. h. jener freiliegenden Bereiche, welche nicht bereits durch das transparente Medium 41 oder das erste Oberfüllmaterial 43 bedeckt sind.

Bei dem zweiten Oberfüllmaterial handelt es sich ebenfalls um einen aushärtbaren hochfüllendes Epoxidharz, welches durch Vergießen in den Bereich zwischen Faseroptik-Platte 23 und dem, als Begrenzungswall dienenden, ausgehärteten ersten Oberfüllmaterial 43 aufgebracht wird.

Beim Vorsehen der erfindungsgemäßen optischen Empfangseinheit 20 in einer Positionsmesseinrichtung kann die Faseroptik-Platte 23 derart ausgebildet sein, dass diese eine weitere Randseite mit Anschlagsfläche 23.4 aufweist. Bei der weiteren Randseite mit Anschlagsfläche 23.4 handelt es sich um eine Randseite, welche nicht das zweite Oberfüllmaterial 44 aufweist, d. h. um jene Seite, welche die Breite der Faseroptik-Platte 23 definiert, wie Fig. 2 zu entnehmen ist. Durch die weitere Randseite mit Anschlagsfläche 23.4 kann ein beschädigungsfreier Kontakt mit anderen Bauteilen der Positionsmesseinrichtung hergestellt werden. Hierzu kann die weitere Randseite mit Anschlagsfläche 23.4 der Faseroptik-Platte 23 geeignet ausgebildet sein, beispielsweise indem die weitere Randseite mit Anschlagsfläche 23.4 über eine geeignete Kontur bzw. Strukturierung verfügt, eine Schutzschicht aufweist und ergänzend oder alternativ stoßfest ausgebildet ist.

Die Faseroptik-Platte 23 ragt, wie in Fig. 4 gezeigt, mit der weiteren Randseite mit Anschlagsfläche 23.4 über das Trägersubstrat 22 hinaus, so dass ein Überstand H zwischen der Außenfläche der Seitenwand 22.12 des Trägersubstrats 22 und der weiteren Randseite mit Anschlagsfläche 23.4 der Faseroptik-Platte 23 vorliegt.

Mithilfe der weiteren Randseite mit Anschlagsfläche 23.4 und dem Überstand H kann die erfindungsgemäße optische Empfangseinheit 20 innerhalb der Positionsmesseinrichtung beschädigungsfrei und vorbestimmt relativ zu einem Bauteil positioniert und ausgerichtet werden. Bei dem Bauteil kann es sich beispielsweise um das zweite Objekt O₂ handeln und insbesondere um das Gehäuse der Positionsmesseinrichtung.

Neben dem konkret beschriebenen Ausführungsbeispiel existieren im Rahmen der vorliegenden Erfindung selbstverständlich noch weitere Ausgestaltungsmöglichkeiten.

So ist es keinesfalls zwingend, genau vier Abstandshaltemittel 27 mit rundem Querschnitt zu verwenden. Im Rahmen der Erfindung kann alternativ eine beliebige andere Anzahl an Abstandshaltemitteln mit einer geeigneten abweichenden Form genutzt werden. Es ist beispielsweise denkbar nur zwei längliche Abstandshaltemittel zu nutzen, welche parallel zu den Längsseiten der Detektoreinheit bzw. Detektorelementen verlaufen oder auch nur ein einziges Abstandshaltemittel, welches C-förmig bzw. in Form eines an einer Seite offenen Rechtecks ausgebildet ist und die Detektorelemente umgibt.

Ebenfalls ist es möglich, ergänzend oder alternativ zum beschriebenen Ausführungsbeispiel die Abstandshaltemittel 27 zwischen der Endfläche 22.3 des Trägersubstrats 22 und der Lichtaustrittsfläche 23.3 der Faseroptik-Platte anzuordnen, um den vorbestimmten Abstand zwischen der Faseroptik-Platte 23 und der Detektoreinheit 25 auszubilden. Vorteilhafterweise ist die Endfläche 22.3 des Trägersubstrats 22 dann plan ausgebildet und verläuft parallel zur Oberseite 25.1 der Detektoreinheit 25.

Gemäß einem alternativen Ausführungsbeispiel ist als transparentes Medium 41 statt einem transparenten Klebstoff ein transparentes Gasgemisch - beispielsweise in Form von Luft - vorgesehen, welches sich im Zwischenraum 28 befindet. Zur Abschirmung der Detektoreinheit 25 vor unerwünschten Medien von außen kann dann vorgesehen sein, dass sich das zweite Oberfüllmaterial 44 zusätzlich teilweise in den Zwischenraum 28 erstreckt und diesen abdichtet. Das zweite Oberfüllmaterial 44 erstreckt sich gemäß diesem alternativen Ausführungsbeispiel dann von einem Teilabschnitt des ersten Oberfüllmaterials 43 über einen Teilabschnitt der Oberseite 25.1 der Detektoreinheit 25 und teilweise hinein in den Zwischenraum 28, so dass das zweite Oberfüllmaterial 44 auch die Lichtaustrittsfläche 23.2 der Faseroptik-Platte 23 teilweise bedeckt. Ergänzend kann das zweite Oberfüllmaterial 44 sich dann auch zusätzlich bis zur Randseite 23.3 der Faseroptik-Platte 23 und ergänzend oder alternativ bis zu den Abstandshaltemitteln 27 erstrecken.

Ergänzend zu dem in den Figuren gezeigten Ausführungsbeispiel und insbesondere dem zuvor stehenden alternativen Ausführungsbeispiel kann auch ein zusätzliches drittes Oberfüllmaterial vorgesehen sein, welches für einen zusätzlichen Schutz der Detektoreinheit 25 gegen unerwünschte Medien von außen sorgt. Dieses dritte Oberfüllmaterial kann innerhalb der Vertiefung 22.1 angeordnet sein und parallel zum Unterfüllmaterial 42 verlaufen. Genauer gesagt, kann sich das dritte Oberfüllmaterial von der Grundfläche 22.11 des Trägersubstrats 22 über die die Längsseiten bildenden Randseiten der Detektoreinheit 25 bis zur Lichtaustrittsfläche 23.2 der Faseroptik-Platte 23 erstrecken. Mit dem dritten Oberfüllmaterial sollen die letzten verbleibenden exponierten Flächen der Detektoreinheit 25 geschützt werden bzw. im Falle des alternativen Ausführungsbeispiels für eine zusätzliche Abdichtung des Zwischenraums 28 mit dem darin befindlichen transparenten Gasgemisch als transparentes Medium 41 gesorgt werden. Der Zwischenraum 28 wird somit von allen Seiten abgedichtet. Das dritte Oberfüllmaterial kann identisch zum ersten Oberfüllmaterial 43 und ergänzend oder alternativ zum zweiten Oberfüllmaterial 44 ausgebildet sein, d. h. es kann sich ebenfalls um ein hochgefülltes Epoxidharz handeln, welches durch Vergießen aufgebracht wird.

Ferner kann eine Faseroptik-Platte 23 verwendet werden, die unerwünschte Lichtanteile absorbiert und unterdrückt - also jene Lichtstrahlen, die nicht durch die einzelnen Lichtleitfasern verlaufen. Derartige unerwünschte Lichtanteile können bei einem nicht zu vermeidenden Lichteinfall zwischen den Lichtleitfasern entstehen oder aber bei sehr stark geneigten Lichtstrahlen, die nicht innerhalb der numerischen Apertur der Lichtleitfasern liegen. Eine solche Absorption unerwünschter Lichtanteile kann durch ein absorbierendes Glasmedium zwischen den Lichtleitfasern sichergestellt werden, das Licht absorbiert, welches nicht zur Signalerzeugung beiträgt. Störendes Streulicht lässt sich auf diese Art und Weise besonders gut unterdrücken.

### BEZUGSZEICHENÜBERSICHT

- 10: Maßverkörperung,
- 11: Messteilung,
- 11.1, 11.2: Teilungsbereiche,

- 20: Empfangseinheit,
- 22: Trägersubstrat,
- 22.1: Vertiefung,
- 22.11: Grundfläche,
- 22.12: Seitenwand,
- 22.3: Endfläche,
- 22.4: Anschlussmittel,
- 23: Faseroptik-Platte,
- 23.1: Lichteintrittsfläche,
- 23.2: Lichtaustrittsfläche,
- 23.3: Randseite,
- 23.4: weitere Randseite mit Anschlagsfläche,
- 25: Detektoreinheit,
- 25.1: Oberseite,
- 25.2: Randseite,
- 25.3: Anschlussmittel,
- 26: Detektorelement,
- 27: Abstandshaltemittel,
- 28: Zwischenraum,
- 29: Verdrahtung,

- 30: Abtasteinheit,
- 31: Lichtquelle,

- 41: transparentes Medium,
- 42: Unterfüllmaterial,
- 43: erste Oberfüllmaterial,
- 44: zweites Oberfüllmaterial,
- x: Messrichtung,
- O₁: erstes Objekt,
- O₂: zweites Objekt,
- H: Überstand;

## Patentansprüche

1. Optische Empfangseinheit (20) für eine Positionsmesseinrichtung, wobei die Empfangseinheit (20) umfasst:
• ein Trägersubstrat (22),
• eine Detektoreinheit (25), mit einer Oberseite (25.1), die wenigstens ein Detektorelement (26) aufweist,
• eine Faseroptik-Platte (23), bestehend aus einer Vielzahl aneinandergrenzend angeordneter Lichtleitfasern, deren eines Ende eine Lichteintrittsfläche (23.1) und deren anderes Ende eine Lichtaustrittsfläche (23.2) der Faseroptik-Platte (23) bilden,
wobei die Detektoreinheit (25) auf dem Trägersubstrat (22) angeordnet ist,
wobei zwischen der Lichtaustrittsfläche (23.2) der Faseroptik-Platte (23) und der Oberseite (25.1) der Detektoreinheit (25) ein Zwischenraum (28) durch wenigstens ein Abstandshaltemittel (27) ausgebildet ist,
wobei der Zwischenraum (28) zumindest teilweise mit einem transparenten Medium (41) ausgefüllt ist.

2. Empfangseinheit nach Anspruch 1, wobei das wenigstens eine Abstandshaltemittel (27) zwischen der Lichtaustrittsfläche (23.2) der Faseroptik-Platte (23) und der Oberseite (25.1) der Detektoreinheit (25) angeordnet ist.

3. Empfangseinheit nach einem der vorhergehenden Ansprüche, wobei das transparente Medium (41) das wenigstens eine Detektorelement (26) flächig bedeckt.

4. Empfangseinheit nach einem der vorhergehenden Ansprüche, wobei das wenigstens eine Abstandshaltemittel (27) einen runden Querschnitt aufweist und vom transparenten Medium (41) umschlossen ist.

5. Empfangseinheit nach einem der vorhergehenden Ansprüche, wobei als transparentes Medium (41) ein aushärtbares, mit Kapillarwirkung in den Zwischenraum (28) drucklos einbringbares Epoxidharz oder Silikon vorgesehen ist.

6. Empfangseinheit nach einem der Ansprüche 1 bis 4, wobei als transparentes Medium (41) ein Gas oder Gasgemisch vorgesehen ist.

7. Empfangseinheit nach einem der vorhergehenden Ansprüche, wobei die Faseroptik-Platte (23) an das Trägersubstrat (22) durch ein Unterfüllmaterial (42) befestigt ist, welches zwischen der Lichtaustrittsfläche (23.2) der Faseroptik-Platte (23) und dem Trägersubstrat (22) angeordnet ist.

8. Empfangseinheit nach einem der vorhergehenden Ansprüche, die weiter umfasst:
• Anschlussmittel (25.3), die an der Detektoreinheit (25) vorhanden sind,
• eine Verdrahtung (29), die zwischen dem Trägersubstrat (22) und den Anschlussmitteln (25.3) der Detektoreinheit (25) ausgebildet ist,
wobei die Anschlussmittel (25.3) und die Verdrahtung (29) durch ein erstes Oberfüllmaterial (43) bedeckt sind, welches sich von der Oberseite (25.1) der Detektoreinheit (25) bis zum Trägersubstrat (22) erstreckt.

9. Empfangseinheit nach Anspruch 8, wobei die Empfangseinheit (20) ein zweites Oberfüllmaterial (44) umfasst, welches sich vom ersten Oberfüllmaterial (43) über die Oberseite (25.1) der Detektoreinheit (25) und wenigstens bis zum transparenten Medium (41) erstreckt.

10. Empfangseinheit nach Anspruch 9, wobei sich das zweite Oberfüllmaterial (44) zusätzlich bis zur Randseite (23.3) der Faseroptik-Platte (23) erstreckt.

11. Empfangseinheit nach einem der vorhergehenden Ansprüche, wobei das Trägersubstrat (22) eine Vertiefung (22.1) aufweist, welche gebildet wird aus einer Grundfläche (22.11) und einer die Grundfläche (22.11) umgebenden Seitenwand (22.12),
wobei die Detektoreinheit (25) innerhalb der Vertiefung (22.1) auf der Grundfläche (22.11) angeordnet ist.

12. Empfangseinheit nach Anspruch 11, wobei die Seitenwand (22.12) des Trägersubstrats eine Endfläche (22.3) aufweist, wobei die Endfläche (22.3) parallel zur Oberseite (25.1) der Detektoreinheit (25) ausgebildet ist und unterhalb der Oberseite (25.1) der Detektoreinheit (25) angeordnet ist.

13. Empfangseinheit nach den Ansprüchen 7 und 12, wobei das Unterfüllmaterial (42) auf der Endfläche (22.3) des Trägersubstrats (22) angeordnet ist, wobei sich das Unterfüllmaterial (42) zusätzlich bis zur Randseite (23.3) der Faseroptik-Platte (23) erstreckt.

14. Empfangseinheit nach einem der vorhergehenden Ansprüche, wobei die Faseroptik-Platte (23) mit wenigstens einer weiteren Randseite (23.4) über das Trägersubstrat (22) hinausragt.

15. Optische Positionsmesseinrichtung zur Bestimmung der Position eines ersten Objekts (O₁) gegenüber einem relativ hierzu entlang mindestens einer Messrichtung (x) beweglichen zweiten Objekt (O₂) mit
• einer sich entlang der Messrichtung (x) erstreckenden Maßverkörperung (10), die mit dem ersten Objekt (O₁) verbunden ist und mindestens eine Messteilung (11) umfasst, die aus alternierenden entlang der Messrichtung (x) angeordneten Teilungsbereichen (11.1, 11.2) mit unterschiedlichen optischen Eigenschaften besteht, und
• einer Abtasteinheit (30), die mit dem zweiten Objekt (O₂) verbunden ist und mindestens eine Lichtquelle (31) und die optische Empfangseinheit (20) nach mindestens einem der Ansprüche 1 bis 14 umfasst,
wobei aus der Wechselwirkung zwischen den von der Lichtquelle (31) emittierten Strahlenbündeln mit der Messteilung (11) ein Lichtmuster resultiert und die Faseroptik-Platte (23) das Lichtmuster in eine Detektionsebene des zumindest einen Detektorelements (26) überträgt.

16. Optische Positionsmesseinrichtung nach Anspruch 15, wobei die Faseroptik-Platte (23) der optischen Empfangseinheit (20) mit wenigstens einer weiteren Randseite (23.4) über das Trägersubstrat (22) hinausragt und ein Kontakt zwischen der weiteren Randfläche (23.4) der Faseroptik-Platte (23) und dem zweiten Objekt (O₂) ausgebildet ist, so dass eine vorbestimmte relative Positionierung der Empfangseinheit (20) zum zweiten Objekt (O₂) ausgebildet ist.

17. Optische Positionsmesseinrichtung nach Anspruch 16, wobei das zweite Objekt (O₂) das Gehäuse der optischen Positionsmesseinrichtung ist.
